(19) Europäisches Patentamt
European Patent Office
Office européen des brevets

(11) Publication number: **0 204 845 B1**

(12) # EUROPEAN PATENT SPECIFICATION published in accordance with Art. 158(3) EPC

(45) Date of publication of patent specification: **20.03.91** (51) Int. Cl.5 **B23D 36/00**

(21) Application number: **85905879.4**

(22) Date of filing: **15.11.85**

(86) International application number: **PCT/JP85/00638**

(87) International publication number: **WO 86/03150 (05.06.86 86/12)**

(54) **ROTARY CUTTER CONTROL METHOD.**

(30) Priority: **30.11.84 JP 253047/84**

(43) Date of publication of application: **17.12.86 Bulletin 86/51**

(45) Publication of the grant of the patent: **20.03.91 Bulletin 91/12**

(84) Designated Contracting States: **CH DE FR GB IT LI NL**

(56) References cited:
GB-A- 485 460
GB-A- 1 542 988
JP-A-49 100 682
JP-A-55 106 721

(73) Proprietor: **MITSUBISHI JUKOGYO KABUSHIKI KAISHA**
**5-1, Marunouchi 2-chome Chiyoda-ku**
**Tokyo 100(JP)**

(72) Inventor: **SHIMIZU, Yujiro Takasago Technical Institute**
**Mitsubishi Jukogyo K.K. 1-1, Shinhama 2-chome**
**Arai-choo Takasago City Hyogo Pref. 676(JP)**
Inventor: **FUJIWARA, Kenji Takasago Technical Institute**
**Mitsubishi Jukogyo K.K. 1-1, Shinhama 2-chome**
**Arai-choo Takasago City Hyogo Pref. 676(JP)**
Inventor: **KUROMARU, Hiroshi Takasago Technical Institute**
**Mitsubishi Jukogyo K.K. 1-1, Shinhama 2-chome**
**Arai-cho Takasago City Hyogo Pref. 676(JP)**

EP 0 204 845 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **MIYAUCHI, Reizo Takasago Technical Institute**
**Mitsubishi Jukogyo K.K. 1-1, Shinhama 2-chome**
**Arai-choo Takasago City Hyogo Pref. 676(JP)**
Inventor: **KUWAHARA, Koji Takasago Technical Institute**
**Mitsubishi Jukogyo K.K. 1-1, Shinhama 2-chome**
**Arai-cho Takasago City Hyogo Pref. 676(JP)**
Inventor: **TAKAMI, Isao Takasago Technical Institute**
**Mitsubishi Jukogyo K.K. 1-1, Shinhama 2-chome**
**Arai-cho Takasago City Hyogo Pref. 676(JP)**

(74) Representative: **Meissner, Peter E., Dipl.-Ing. et al**
**Herbertstrasse 22**
**W-1000 Berlin 33(DE)**

## Description

The present invention relates to a method of controlling a rotary cutter for cutting material of long size moving between a pair of rotating shears having shearing edges on its peripheral surface in a predetermined length by controlling a motor for driving the shears according to the precharacterising part of claim 1; see GB-A-15429887.

BACKGROUND TECHNIQUE

An apparatus shown in Fig. 5 is heretofore employed to cut steel plate or corrugated cardboard moving on a line in a predetermined exact length of sheet. The apparatus obtains a moving quantity of material 15 such as corrugated cardboard moving from left to right in Fig. 5 at a speed V by integrating an output of a pulse generator 1 coupled with rollers 30. The moving quantity of the material 15, a rotating speed of shearing edges 13 which is obtained from a pulse generator 11 coupled with the shearing edges 13 and a rotating quantity obtained by integrating the rotating speed are supplied to a control unit 12. A control command produced on the basis of the time when a proximity switch 36 for the shearing edges 13 detects completion of cutting the material is applied to a motor 9 so that the motor 9 drives the shearing edges 13 through a gearing mechanism 14.

This apparatus is described in more detail. Referring to Fig. 6, a counter 2 produces a moving quantity LL of the material and a speed calculator 3 produces a speed VL of the material on the basis of the signal from the pulse generator 1. On the other hand, a counter 8 produces a moving quantity LS of the shear and a speed calculator 16 produces a speed vs of the shear on the basis of the signal from the pulse generator 11. The material moving quantity LL and the shear moving quantity LS are supplied to an adder 17 to obtain $\Delta L$. The value $\Delta L$ is supplied to a gain table number calculator 4 which supplies a table number I to a movement gain table 5 and a speed gain table 6. The movement gain table 5 obtains a gain coefficient GL in accordance with the table number I to produce $GL \cdot \Delta L$. In the same manner, the gain table 6 produces $GV \cdot \Delta V$ where the value $\Delta V$ is an output of an adder 18 to which the shear speed VS and the material speed VL are supplied. Thus, the material moving speed VL, the moving quantity $GL \cdot \Delta L$ which is added on the basis of the $\Delta L$ and the speed $GV \cdot \Delta V$ are supplied to an adder 19 which produces a speed command VR to control a speed controller 7. A rotational number of the motor 9 is supplied to the speed controller 7 from a pulse generator 10.

With such an apparatus, when a cut length of the material 15 is longer than a peripheral length of the shearing edges 13, the speed command supplied to the motor 9 is as shown in Fig. 7. That is, the shear speed VS with regard to the material speed (line speed) VL is adjusted, and if a distance that the material 15 is moved until stopped after the shear edges 13 complete the cutting is $L_1$, the control unit 12 produces only a constant deceleration command without feedback control during $0<LL<L_1$. If a distance that the material 15 is moved until the shearing edges 13 start to be accelerated after the shear edges 13 is once stopped after completion of cutting is $L_2$ and the moving distance until syncronized with the speed of the material 15 after acceleration is $L_3$, the above value $\Delta L$ is obtained and the speed command is supplied to the speed controller 7 during $L_2<LL<L_3$.

As basic commands to cut the material, it is required that a cut length is equal to a specified length and the line speed in cutting is equal to a speed of the shear edges 13. Accordingly, it is required that an exactly constant length of material 15 is fed during from deceleration to acceleration of the shear edges 13 and the line speed VL and the shear speed VS coincide with each other at the time of cutting.

However, the prior art apparatus possesses the following problems.

(1) When the position gain is raised as compared with the speed gain near the cut position to obtain an exact position, the line speed VL does not coincide with the shear speed VS upon cutting. Further, when the speed gain is raised to match the speed, the accuracy of the cut length is degraded. Accordingly, fine adjustment is required to maintain the outting performance and it is hence difficult to maintain the accuracy in an actual apparatus in which the line speed VL is varied delicately.

(2) Acceleration and deceleration require large energy and hence energy efficiency is degraded.

(3) A large capacity motor and a drive system therefor are required.

The present invention has been proposed in order to solve the above prior art problems, and an object of the present invention is to provide a method of controlling a rotary cutter in which high cutting accuracy is maintained and operation is effected with minimum energy to reduce the power of a motor and minimize the running cost.

This object is achieved by a method having the steps of claim 1.

DISCLOSURE OF THE INVENTION

An optimum shear position ($x_1^{**}(\ell_\ell)$) with minimum energy is calculated from moving quantity ($\ell_\ell$) of material and an optimum shear speed ($x_2^{**}(\ell_\ell)$) and an optimum motor current ($i^{**}(\ell_\ell)$) with minimum energy are calculated from the moving quantity ($\ell_\ell$) of the material and moving speed ($V_\ell$) of the material, respectively. The shear is rotated in order to realize the above calculated condition.

According to the present invention with such a configuration, optimum control input (optimum motor current) and optimum track (optimum shear position) are obtained as function of the moving quantity (moving distance) of the material. These parameters are supplied as feed-forward inputs to a servo-system, for example, that is, inputs for performing necessary correction before influence due to variation of the moving quantity of the material appears in a control system, to control the shear, so that control accuracy can be enhanced and operation with minimum energy can be made.

BRIEF DESCRIPTION OF THE DRAWINGS

Fig. 1 is a block diagram showing an embodiment of a control unit used to implement a method of controlling a rotary cutter according to the present invention, Fig. 2 graphically illustrates speed tracks of shears in the embodiment shown in Fig. 1 and a prior art, Figs. 3(a) to (e) illustrate various prior art straight speed track patterns, respectively, Figs. 4(a) to (e) illustrate speed track patterns in another embodiment implementing a method of the present invention, Fig. 5 schematically illustrates a configuration of a prior art rotary cutter, Fig. 6 is a block diagram of a control unit for the rotary cutter shown in Fig. 5, and Fig. 7 is the same graph as Fig. 3 illustrating speed track pattern when a prior art method is implemented.

BEST MODE FOR IMPLEMENTING THE INVENTION

An embodiment of the present invention is now described in detail with reference to the attached drawings.

Fig. 1 illustrates a configuration of an embodiment of the control unit used to implement the method of the present invention, in which like elements to those of Fig. 5 are given like numerals and description thereof is simplified.

An output of the pulse generator 1 coupled with the roller 30 is integrated with regard to time in an integrator 2, which produces a material moving distance (moving quantity) $\ell_\ell$ which is supplied to an optimum position command generator 32, an optimum speed ratio command generator 22 and an optimum acceleration ratio command generator 24. The generators 32, 22 and 24 possess ideal curve characteristics made in accordance with a cut length Lo. The curves possess characteristics which do not vary due to variation of the material moving speed. The characteristics and optimality are described later.

On the other hand, the pulse generator 11 supplies moving speed Vs of the shearing edges 13 to an integrator 8 which integrates the moving speed Vs with regard to time to produce moving quantity $\ell s$ of the shear edges. The shear edge moving quantity $\ell s$ is added to the output $x_1^{**}$ of the position command generator 32 in an adder 29 which produces position deviation $\Delta\ell = x_1^{**} - \ell s$. The position deviation $\Delta\ell$ is supplied to a position controller 33 and the controller 33 produces $V_{KL}$.

Further, the speed ratio command $dx_1^{**}/d\ell_\ell$ produced from the speed ratio command generator 22 is multiplied by the output $d\ell_\ell/dt$ produced from the pulse generator 1 in a material speed multiplier 23 which produces a speed command $dx_1^{**}/dt(\equiv x_2^{**})$. The speed command $x_2^{**}$ is added to $V_{KL}$ and Vs in an adder 30' to obtain a speed deviation $\Delta V = V_{KL} + x_2^{**} - Vs$, which is supplied to a speed controller 34 which produces Akv.

An acceleration ratio command $d^2x_1^{**}/d_2\ell_\ell^2$ produced from the acceleration ratio command generator 24 is multiplied by the output $d\ell_\ell^2/dt^2$ of the pulse generator 1 in two series connected material speed multipliers 25 and 26 to obtain an acceleration command $d^2x_1^{**}\ dt^2 = Ac$. The acceleration command is supplied to a constant multiplier 27 which produces a current command $i^{**}$. A coefficient established in the multiplier is $I/K_I$ where $K_I$ is a torque constant of the motor and I is an inertia moment of the motor and the shear. There is a relation between she acceleration Ac and the motor current i as follows.

$$i = \frac{I}{K_I} Ac$$

Therefore, if the acceleration Ac is multiplied by $I/K_I$, the current i can be obtained from the acceleration Ac. The current command $i^{**}$ is added to the above output Akv and an armature current i of the motor 9 detected by a current detector 28 in an adder 31 which produces a current deviation $\Delta i = i^{**}$ Akv-i. The output of the adder 31 is supplied through a current controller 21 to the motor 9 as a command.

Configuration of the optimum position command generator 32, the optimum speed ratio command generator 22 and the optimum acceleration ratio command generator 24 is now described.

The equation of motion of the shear is given by:

$$I \frac{d^2 \ell_\ell}{dt^2} = K_I \cdot i \qquad \ldots.(1)$$

In order to minimize the consumption energy of the motor, the estimation function may be selected as follows:

$$J = \int_0^T i^2 dt \rightarrow \min \qquad \ldots.(2)$$

The termination time T, initial condition and termination condition are as follows:

$$\text{Termination time} \qquad T = Lo/V_\ell \qquad \ldots.(3)$$

$$\text{Initial condition} \qquad \left.\begin{aligned} x_1(0) &= 0 \\ x_2(0) &= V_\ell \end{aligned}\right\} \qquad \ldots.(4)$$

$$\text{Termination condition} \qquad \left.\begin{aligned} x_1(T) &= Ls \\ x_2(T) &= V_\ell \end{aligned}\right\} \qquad \ldots.(5)$$

where Lo is a cut length and Ls is a shear length.

The equation (3) shows that the cutting time is given by $Lo/V_\ell$. It is assumed that the shear position at the beginning is 0 and the shear speed is synchronized with the line speed. The termination condition shows that when the material is moved by Lo, the shear makes just one revolution, and the shear speed is synchronized with the line speed. Cutting is performed upon termination. The condition equation of the controlled object is as follows:

$$\left.\begin{aligned} \frac{dx_1}{dt} &= x_2 \\ \frac{dx_2}{dt} &= m \end{aligned}\right\} \qquad \ldots.(6)$$

where $m = K_I \cdot i/I$, $x_1 = \ell_\ell$ and $x_2 = d\ell_\ell/dt$.

With regard to the system expressed by the equation (6), an optimum control input $m^*$ and optimum tracks $x_1^*$ and $x_2^*$ for minimizing the equation (2) under conditions of the equations (3), (4) and (5) are calculated using the maximum principle as follows:

$$m^* = \frac{Ls - V_\ell T}{\frac{1}{12} T^4} \left(-T \cdot t + \frac{T^2}{2}\right) \quad \text{....(7)}$$

Displacement

$$x_1^*(t) = \frac{12(Ls - V_\ell T)}{T^4} \left(-\frac{T}{6} t^3 + \frac{T^2}{4} t^2\right) + V_\ell t$$

Speed

$$x_2^*(t) = \frac{12(Ls - V_\ell T)}{T^4} \left(-\frac{T}{2} t^2 + \frac{T^2}{2} t\right) + V_\ell \quad \text{....(8)}$$

The value of the estimation function is given by:

$$\min J = 12 \left(\frac{Ls - V_\ell T}{\frac{K_I}{I}}\right)^2 T^{-3} \quad \text{....(9)}$$

The foregoing is a simple application of the maximum principle and is effected only when the line speed $V_\ell$ is constant. However, the line speed $V_\ell$ is actually varied momently. In the optimum problem taking into consideration the speed variation, the termination time and the boundary condition are given as follows:

Termination time $$\int_0^T V_\ell dt = Lo \quad \text{....(10)}$$

(Lo: cut length)

Initial condition $$x_1(0) = 0, \quad x_2(0) = V_\ell(0) \quad \text{....(11)}$$

Termination Condition $$x_1(T) = Ls, \quad x_2(T) = V_\ell(T) \quad \text{....(12)}$$

(Ls: peripheral length of shear)

Since the variation of the line speed can not be known previously, an optimum solution can not be obtained at the beginning of control. If control neglecting the variation of the line speed is made, the most important cutting accuracy is deteriorated extremely and the practicability thereof is lost. In order to maintain the cutting accuracy, the accuracy generally expressed by the following equation is required.

$$\frac{\int_0^T V_\ell dt - Lo}{Lo} < 10^{-4}$$

Accordingly, principal points of the present invention is that the control method having the following features is obtained.

(1) When there is no variation in speed, the optimality is ensured and the equation (10) is satisfied.

(2) When there is variation in speed, the optimality collapses but the equation (12) is satisfied.

When there is no variation in speed, the optimum track is as follows:

$$x_1^* \ (t) = (Ls-V_\ell T)\{-2(\frac{t}{T})^3 + 3(\frac{t}{T})^2\} + V_\ell t \qquad \ldots.(13)$$

$$x_2^* \ (t) = \frac{(Ls-V_\ell T)}{T}\{-6(\frac{t}{T})^2 + 6(\frac{t}{T}) \} + V_\ell \qquad \ldots.(14)$$

The following equations are used to transform the equation (13).

$$V_\ell T = Lo \qquad \ldots.(15)$$

$$V_\ell t = \ell_\ell \qquad \ldots.(16)$$

Then, the track of position is a function including only the moving quantity $\ell_\ell$ of the material as shown by the following equation.

$$x_1^{**}(\ell_\ell) = (Ls-Lo)\{-2(\frac{\ell_\ell}{Lo})^3+3(\frac{\ell_\ell}{Lo})^2\} + \ell_\ell \qquad \ldots.(17)$$

If the moving quantity of the material is measured to calculate the equation (17), a rather optimum track of the shear position can be understood. When $V_\ell$ is constant, the equation (17) produces the optimum track. When $\ell_\ell$ is Lo, the moving quantity $x_1^{**}$ (Lo) of the shear is as follows:

$$x_1^{**} \ (Lo) = Ls \qquad \ldots.(18)$$

Accordingly, the track satisfying the equation (12) for the termination condition of the position in T satisfying the equation $\int_0^T V_\ell dt = Lo$ is obtained as a function of $\ell_\ell$.

The equation (17) is differentiated by time to obtain the track of the speed.

$$x_2^{**}(\ell_\ell) = \frac{d}{dt} x_1^{**}(\ell_\ell) \ \frac{dx_1^{**}(\ell)}{d\ell_\ell} \cdot \frac{d\ell_\ell}{dt}$$

$$\therefore$$

$$x_2^{**}(\ell_\ell) = [(Ls-Lo)\{-6\frac{\ell_\ell^2}{Lo^3} + 6\frac{\ell_\ell}{Lo^2}\}+1] \ V_\ell \qquad \ldots.(19)$$

where $V_\ell = d\ell_\ell/dt$.
It is understood that when $\ell_\ell$ and $V_\ell$ are measured and calculation of the equation (19) is made, the rather optimum track of the speed can be obtained.

The initial condition and the termination condition of the equation (19) are as follows and the boundary condition is satisfied.

$$x_2(0) = x_2^{**}(0) = V_\ell(0)$$

$$x_2(T) = x_2^{**}(Lo) = V_\ell(T)$$

By differentiating the equation (19) by time, the control input is obtained as follows:

$$i^{**}(\ell_\ell) = \frac{I}{K_I} m^{**}(\ell_\ell) = \frac{I}{K_I}\frac{d}{dt}x_2^{**}$$

$$= \frac{I}{K_I}\left[(Ls-Lo)\left\{-12\frac{\ell_\ell}{Lo^3} + \frac{6}{Lo^2}\right\} +1\right]V_\ell^2$$

$$+\frac{I}{K_I}\left[(Ls-Lo)\left\{-6\frac{\ell_\ell^2}{Lo^3} +6\frac{\ell_\ell}{Lo^2}\right\}+1\right] m\ell \qquad \text{....(20)}$$

where $m\ell = dV_\ell/dt$ and this is the line acceleration.

This equation shows that there can be obtained the rather optimum control input satisfying the termination time, the initial condition and the termination condition by measuring $\ell_\ell$, $V_\ell$ and $m\ell$ and calculating the equation (20). Further, it is apparent that if the line speed is constant, the equations (17), (19) and (20) are the optimum track and optimum control input.

When the control input shown by the equation (20) is supplied, difference between a numerically expressed model and an actual machine appears and it is difficult to satisfy the equation (12) of the termination condition. Accordingly, the shear drive system forms a servo system in which the motor current, the motor speed and the position are fed back and the follow-up control (with a target being varied) in which the optimum track of the shear position expressed by the equation (17) is a target is performed. The speed track of the equation (19) and the current track of the equation (20) are used as auxiliary inputs for increasing the follow-up performance.

In addition, since the second term of the equation (20) is extremely smaller as compared with the first term thereof, the first term is neglected actually.

As described above, the optimum position command generator 32 produces $x_1^{**}$ by calculating the equation (17) with $\ell_\ell$ as a variable.

The optimum speed ratio command generator 22 produces $dx_1^{**}d\ell_\ell$ on the basis of the following equation with $\ell_\ell$ as a variable.

$$\frac{dx_1^{**}}{d\ell_\ell} = (Ls-Lo)\left\{-6\frac{\ell_\ell^2}{Lo^3} +6\frac{\ell_\ell}{Lo^2}\right\} + 1 \qquad \text{....(21)}$$

The optimum acceleration ratio command generator 24 produces $d^2x_1^{**}d\ell_\ell^2$ on the basis of the following equation with $\ell_\ell$ as a variable.

$$\frac{d^2x_1^{**}}{d\ell_\ell^2} = (Ls-Lo)\left\{-12\frac{\ell_\ell}{Lo^3} + \frac{6}{Lo^2}\right\} + 1 \qquad \text{....(22)}$$

Operation of the above embodiment of the present invention is now described.

The embodiment of the present invention forms a servo system in which the rather optimum track $x_1^{**}$ is a target and the operation of the shear position approximates $x_1^{**}$. When the servo system is given only $x_1^{**}$ as a target, a delay in the following operation of the servo system is produced and deviation from the optimum track is increased. However, since the rather optimum current command producing the rather optimum speed command and the rather optimum acceleration is added to the speed and the input of the current controller, the track highly approximating the rather optimum track is formed.

As described above, according to the present invention, excellent effects as described below are attained.

(1) Low oonsumption of energy

The prior art system varies the speed linearly as shown in Fig. 7. When cutting is made in a case where $t_1 = t_2$ in Fig. 7, that is, without pause period, largest load is imposed on the motor. The motor capacity is selected on the basis of this condition (hereinafter referred to as heavy duty cycle).

The heavy duty cycle produces when the cut length Lo is twice the peripheral length Ls of the shear.

$$Lo = 2Ls \qquad \text{....(23)}$$

When the line speed $V_\ell$ is constant, it is necessary that the line is moved by the cut length at the termination time T.

$$V_\ell \cdot T = Lo \qquad \text{....(24)}$$

From the equations (23) and (24), the following equation is obtained.

$$T = 2Ls/V_\ell \qquad \text{....(25)}$$

When a current value is required to decelerate from $V_\ell$ to 0 in time T/2 and accelerate from 0 to $V_\ell$ in the next time T/2; the following equation is satisfied.

$$V_\ell = \alpha \cdot \frac{T}{2} = \alpha \frac{Ls}{V_\ell} = \frac{K_I}{I} i \frac{Ls}{V_\ell} \qquad \text{....(26)}$$

Therefore, from this equation, the current value required to decelerate from $V_\ell$ to 0 in time T/2 and accelerate from 0 to $V_\ell$ in the next time T/2 is given by:

$$i = \frac{I}{LsK_I} V_\ell^2$$

A value of the equation (2) for the estimation function is given by:

$$J = 2\left(\frac{I}{K_I}\right)^2 \frac{V_\ell^2}{Ls} \qquad \text{....(27)}$$

On the other hand, when cutting where Lo = 2Ls is performed in accordance with the present invention, the value of the equation (2) for the estimation function is given by:

$$Jmin = \frac{12}{8}\left(\frac{I}{K_I}\right)^2 \frac{V_\ell{}^3}{Ls}$$

It is understood from this equation that energy required to drive, that is, energy consumption is 75% of the prior art system.

(2) Adoption of small motor

Since the energy required to drive is 75% of the prior art, the capacity of the motor can be reduced to 75% of the prior art.

(3) Exact cutting (1)

While mere application of the maximum principle deteriorates the accuracy of cutting and speed due to external disturbance such as variation of line speed and practical use is difficult, exact cutting is attained even if there is variation of the line speed since the optimum position of the shear is given as a function of the moving distance of the material.

(4) Exact cutting (2)

Since the optimum shear speed and the optimum motor current are obtained from the material moving distance and the material speed and supplied to the servo system as a feedback input, the control accuracy can be further enhanced and operation with minimum energy can be attained.

(5) Smooth acceleration and deceleration

Since the acceleration and deceleration are smoothly effected as compared with the prior art track of the speed, life and noise of a mechanism such as the shear drive unit are improved.

In the above description, while the overall cutting is completed at the instant when the shear speed Vs coincides with the material speed $V_L$, a synchronization section where $Vs = V_L$ is provided actually and cutting is generally made in the section. The essential operation described above is not changed even if such a section is provided.

Another embodiment is now described. The above embodiment has particularly no limitation except the boundary condition when the optimum speed track is obtained. In this embodiment, when the prior art straight track is used as the speed track, the track with minimum energy required is obtained. That is, the configuration of this embodiment is the same as the above embodiment with the exception of a command generator for generating the track condition.

Fig. 3 shows examples of the prior art straight speed tracks. Since these tracks are defined to satisfy the conditional equations (3), (4) and (5), any consideration is made to the required energy.

Thus, in this embodiment, when deceleration is changed to acceleration or acceleration is changed to deceleration as shown in Fig. 4, a section in which movement is made at constant speed is provided between the deceleration and the acceleration and speed track is determined so that the required energy is minimized. That is, this corresponds to the fact that the speed track obtained by the above embodiment (refer to the secondary curve of Fig. 2) is approximated by three straight lines.

In this case, the equation corresponding to the equation (2) of the above embodiment is as follows:

$$J = \int_{0}^{T} i^2 dt$$

$$= 2 \cdot \dot{J}(tb, Vb) = 2 \cdot \frac{1}{tb}(Vb - V_\ell)^2 \cdot (\frac{I}{K_I})^2 \qquad \text{....(100)}$$

where tb is a time when the constant speed Vb is reached from the deceleration condition (acceleration condition). From the conditions of the equations (3), (4) and (5), tb and Vb are expressed as follows:

$$tb = (Lo \cdot Vb - Ls \cdot V_\ell)/(Vb - V_\ell) \cdot V_\ell \qquad \text{....(101)}$$

If the equation (101) is used in the equation (100) and the following equation is solved

$$dJ(Vb)/dVb = 0 \qquad \text{....(102)}$$

the following equation is obtained

$$Vb_1 = V_\ell \qquad \text{....(103)}$$

$$Vb_2 = V_\ell - \frac{3}{2} \cdot \frac{(Lo - Ls)}{Lo} \cdot V_\ell \qquad \text{....(104)}$$

Accordingly, it is understood that the consumption power is minimized at Vb. Further, tb at this time is as follows:

$$tb = \frac{1}{3} \cdot \frac{Lo}{V_\ell} \qquad \text{....(105)}$$

Accordingly, it is understood that the speed track is established so that the period of the shear 13 is divided into three parts equally and the equations (3), (4) and (5) are satisfied.

The required energy at this time is given by

$$J(\frac{1}{3}\dot{L}o/Vb) = \frac{27}{2} \frac{(Lo - Ls)^2}{Lo^3} \cdot V_\ell^3 \cdot (\frac{I}{K_I})^2 \qquad \text{....(106)}$$

The energy consumption in the heavy duty cycle of Lo = 2Ls is given by

$$J = \frac{27}{16} \cdot \frac{V_\ell^3}{Ls} \cdot (\frac{I}{K_I})^2 \qquad \text{....(107)}$$

As compared with the consumption energy of the prior art straight track shown by the equation (27), the energy consumption is as follows:

$$27/16/2 = 27/32 = 0.843 \qquad \ldots.(108)$$

The energy consumption is 84.3% of the prior art.

The second embodiment corresponds to the modification of the first embodiment in which the speed track is approximated by three straight lines. The consumption of energy is slightly deteriorated, and since the speed track is straight, the acceleration track is constant and the position track is expressed by a quadratic equation. Accordingly, the hardware and software for realizing the embodiment are simple. If the number of the approximating straight lines is increased, it is possible to approximate the optimum track to any extent. However, the hardware and software are complicated accordingly and merit using straight lines is reduced.

INDUSTRIAL AVAILABILITY

The method of controlling the rotary cutter according to the present invention is useful to reduce the running cost while operating under the condition of minimum energy when material of long size such as steel plate or corrugated cardboard moving between a pair of shears is cut in a sheet.

**Claims**

1. Method of controlling a rotary cutter in which material of long size moving between a pair of rotating shears having shearing edges on its peripheral surface is cut in a predetermined length by controlling a motor for driving the shears comprising the steps of calculating a shear position on the basis of the moving quantity of material and moving speed of the material and rotating the shears in accordance with said calculated conditions, characterized in the calculating of the shear position is carried out on an optimum ($x_1^{**}$ ($1_1$)) with minimum energy and that the motor current ($i^{**}$($1_1$)) is calculated at a minimum optimum shear speed ($x_2^{**}$ ($1_1$)) by the following equations:

$$x_1^{**}(\ell_\ell) = (Ls-Lo)\ \{-2(\frac{\ell_\ell}{Lo})^3+3(\frac{\ell_\ell}{Lo})^2\} + \ell_\ell$$

$$x_2^{**}(\ell_\ell) = [(Ls-Lo)\{-6\frac{\ell_\ell^2}{Lo^3}+6\frac{\ell_\ell}{Lo^2}\}+1]V_\ell$$

$$i^{**}(\ell_\ell) = \frac{I}{K_I}\ [(Ls-Lo)\{-12\frac{\ell_\ell}{Lo^3}+\frac{6}{Lo^2}\}+1]\ V_\ell^2 + \frac{I}{K_I}\ [(Ls-Lo)\{-6\frac{\ell_\ell^2}{Lo^3}+6\frac{\ell_\ell}{Lo^2}\}+1]\ \frac{dV_\ell}{dt}$$

where Ls is a peripheral length of the shear, Lo is a cut length, $K_1$ is a torque constant of the motor and I is an inertia moment of the motor and the shear and $V_e$ is the moving speed of the material.

2. A method of controlling a rotary cutter according to Claim 1, characterized in that a drive system of the shear forms a servo-system in which the motor current, the motor speed and position are fed back, the shears being driven by follow-up control having the optimum shear position as a target, the optimum shear speed and the optimum motor current being used as auxiliary inputs.

## Revendications

1. Procédé pour commander un couteau rotatif, dans lequel le matériau de longue taille se déplaçant entre une paire de cisailles rotatives ayant des bords de coupe sur leur surface périphérique est coupé à une longueur prédéterminée en commandant un moteur pour entraîner les cisailles, comprenant les étapes consistant à calculer une position des cisailles sur la base de la quantité de mouvement du matériau, à calculer la vitesse des cisailles sur la base de la quantité de mouvement du matériau et de la vitesse de déplacement du matériau et à faire tourner les cisailles conformément auxdites conditions calculées, caractérisé en ce que le calcul de la position des cisailles est effectué à une position optimale des cisailles ($x_1^{**}(\ell_\ell)$ avec énergie minimale et en ce que le courant du moteur ($i^{**}(\ell_\ell)$ est calculé à une vitesse optimale minimale des cisailles ($x_2^{**}(\ell_\ell)$ par les équations suivantes :

$$x_1^{**}(\ell_\ell) = (Ls-Lo)\left[-2\left(\frac{\ell_\ell}{Lo}\right)^3 + 3\left(\frac{\ell_\ell}{Lo}\right)^2\right] + \ell_\ell$$

$$x_2^{**}(\ell_\ell) = \left[(Ls-Lo)\left(-6\frac{\ell_\ell^2}{Lo^3} + 6\frac{\ell_\ell}{Lo^2}\right) + 1\right]V_\ell$$

$$i^{**}(\ell_\ell) = \frac{I}{K_I}\left[(Ls-Lo)\left(-12\frac{\ell_\ell}{Lo^3} + \frac{6}{Lo^2}\right) + 1\right]V_\ell^2 + \frac{I}{K_I} \cdot \left[(Ls-Lo)\left(-6\frac{\ell_\ell^2}{Lo^3} + 6\frac{\ell_\ell}{Lo^2}\right) + 1\right]\frac{dV_\ell}{dt}$$

où Ls est la longueur périphérique des cisailles, Lo est la longueur coupée, $K_I$ est la constante de couple du moteur et I est le moment d'inertie du moteur et des cisailles, et $V_\ell$ est la vitesse de déplacement du matériau.

2. Procédé pour commander un couteau rotatif selon la revendication 1, caractérisé en ce que le système d'entraînement des cisailles forme un servo-système dans lequel le courant du moteur, la vitesse du moteur et la position subissent une rétroaction, les cisailles étant entraînées par commande d'exploitation ayant la position optimale des cisailles pour but à atteindre, la vitesse optimale des cisailles et le courant optimal du moteur étant utilisés comme entrées auxiliaires.

## Ansprüche

1. Steuerungsverfahren einer rotierenden Schneidevorrichtung, in dem Material langer Größe, das zwischen einer mit Scherkanten auf ihrer Umfangsfläche versehenen sich drehenden Schere geführt wird, durch Steuern eines Motors zum Antrieb der Schere auf eine vorbestimmte Länge zugeschnitten wird, **gekennzeichnet** durch die Verfahrensschritte des Berechnens einer Scherstellung auf der Grundlage der gerade bewegten Materialmenge, Berechnens der Schergeschwindigkeit auf der Grundlage der gerade bewegten Materialmenge und der Drehung der Scheren gemäß den berechneten Bedingungen, dadurch **gekennzeichnet,** daß die Berechnung der Scherstellung auf ein Optimum ($x_1^{**}(1_1)$) mit minimaler Energie ausgeführt und daß der Motorstrom ($i^{**}(1_1)$) bei einem minimalem Schergeschwindigkeitsoptimum ($x_2^{**}(1_1)$ durch Anwendung der folgenden Gleichungen gemessen wird:

$$x_1^{**}(\ell_\ell) = (Ls-Lo)\{-2(\frac{\ell_\ell}{Lo})^3+3(\frac{\ell_\ell}{Lo})^2\} + \ell_\ell$$

$$x_2^{**}(\ell_\ell) = [(Ls-Lo)\{-6\frac{\ell_\ell^2}{Lo^3}+6\frac{\ell_\ell}{Lo^2}\}+1]V_\ell$$

$$i^{**}(\ell_\ell) = \frac{I}{K_I}[(Ls-Lo)\{-12\frac{\ell_\ell}{Lo^3}+\frac{6}{Lo^2}\}+1]\;V_\ell^2 + \frac{I}{K_I}[(Ls-Lo)\{-6\frac{\ell_\ell^2}{Lo^3}+6\frac{\ell_\ell}{Lo^2}\}+1]\frac{dV_\ell}{dt}$$

worin Ls eine periphere Länge der Schere, Lo eine geschnittene Länge, $K_I$ eine Drehmomentkonstante des Motors und I ein Trägheitsmoment des Motors und der Schere und $V_\ell$ die Bewegungsgeschwindigkeit des Materials ist.

**2.** Verfahren nach Anspruch 1, dadurch **gekennzeichnet,** daß ein Antriebssystem der Schere ein Servo-System bildet, in dem der Motorstrom, die Motorgeschwindigkeit und die Stellung zurückgeführt werden, wobei die Scheren durch Nachlaufsteuerung angetrieben werden, der die optimale Scherstellung als Ziel vorgegeben ist, und die optimale Schergeschwindigkeit und der optimale Motorstrom als Hilfseingaben verwendet werden.

F I G. 1

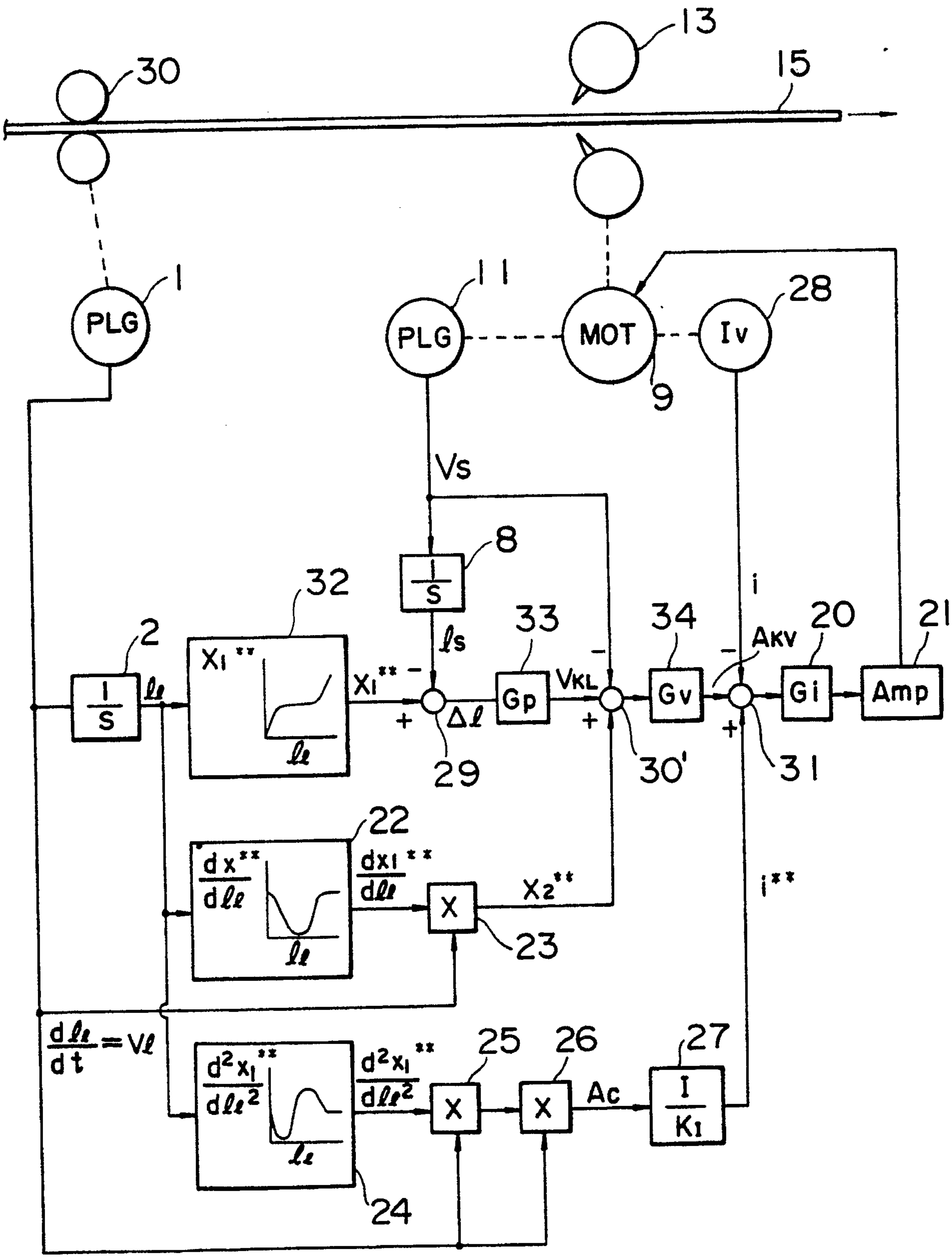

30
13
15
PLG
1
PLG
11
MOT
9
Iv
28
Vs
8
1/s
ℓs
32
X1**
ℓℓ
X1**
2
1/s
ℓℓ
29
Δℓ
Gp
33
VKL
30'
Gv
34
AKV
i
20
Gi
21
Amp
31
22
dx**/dℓℓ
dx1**/dℓℓ
X
23
X2**
i**
dℓℓ/dt = Vℓ
d²x1**/dℓℓ²
d²x1**/dℓℓ²
24
X
25
X
26
Ac
I/K1
27

F I G. 2

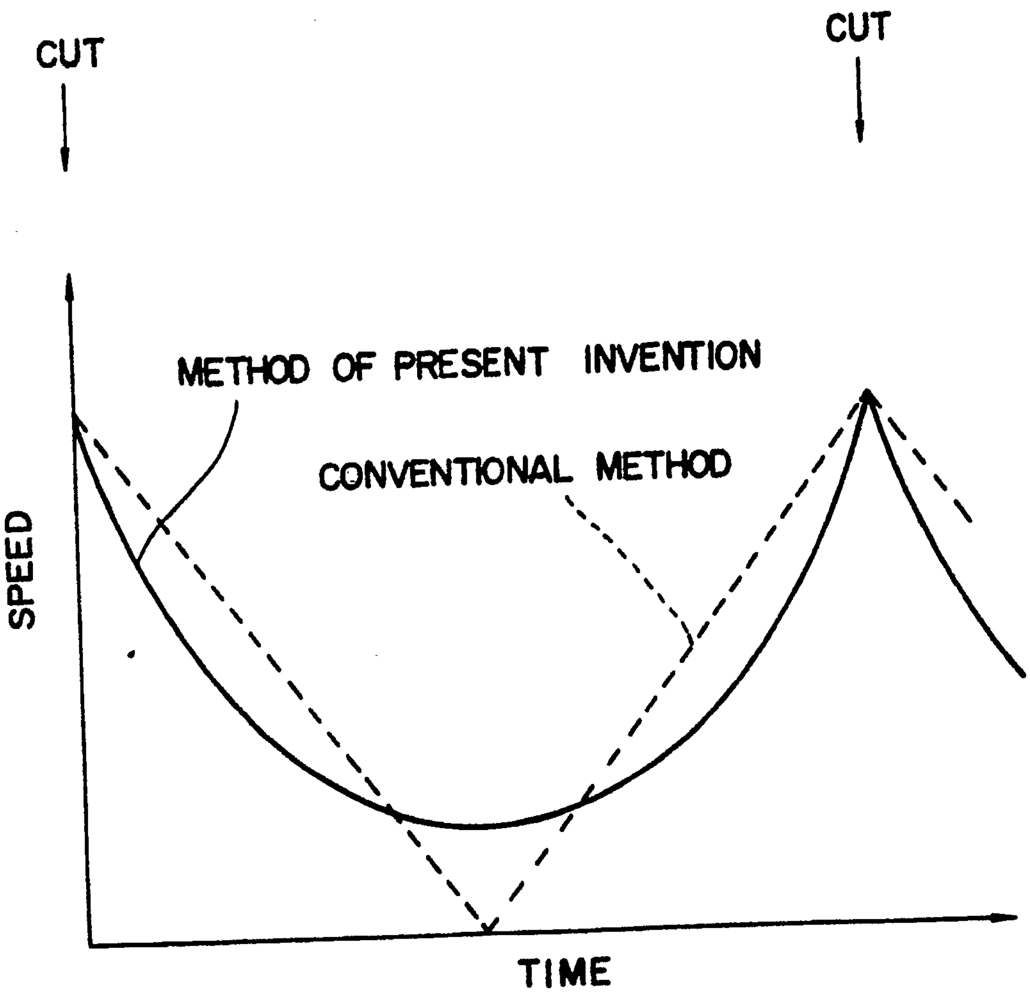
CUT
CUT
METHOD OF PRESENT INVENTION
CONVENTIONAL METHOD
SPEED
TIME

FIG. 3(a)

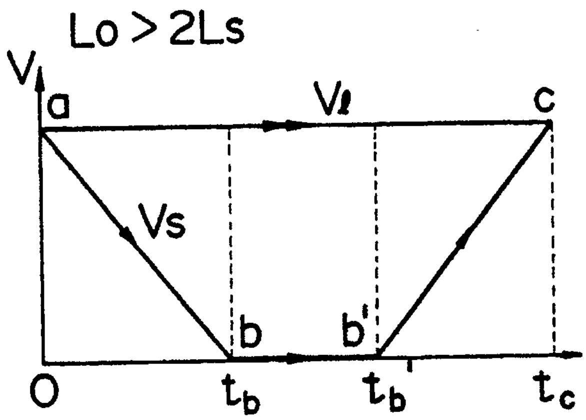


FIG. 3(b)

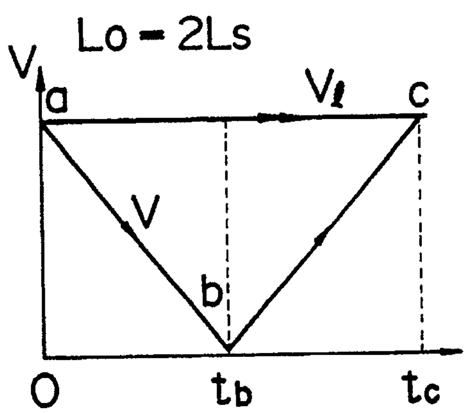


FIG. 3(c)

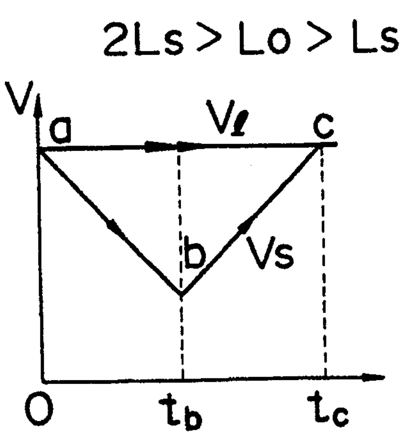


FIG. 3(d)

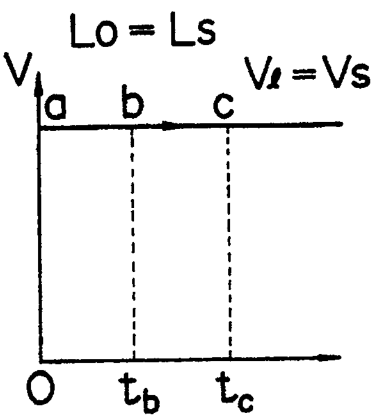


FIG. 3(e)

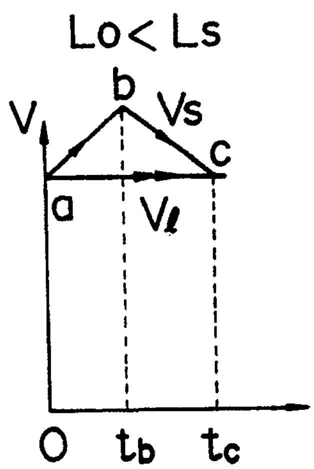

FIG. 4(a)

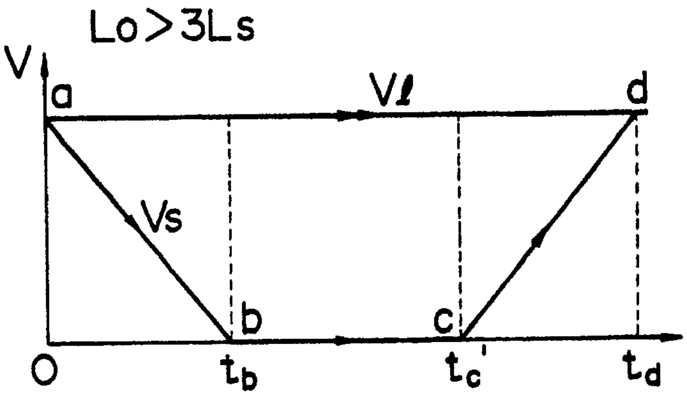


FIG. 4(b)

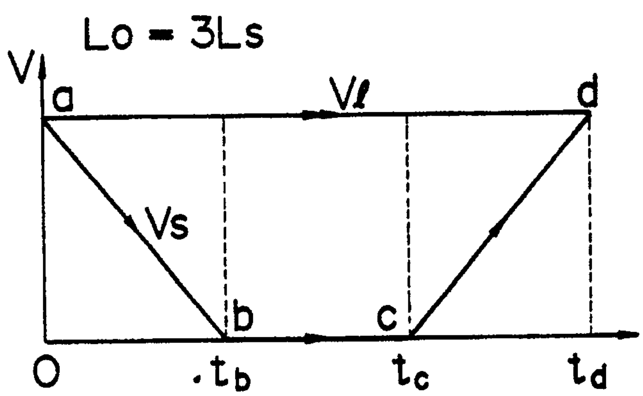


FIG. 4(c)

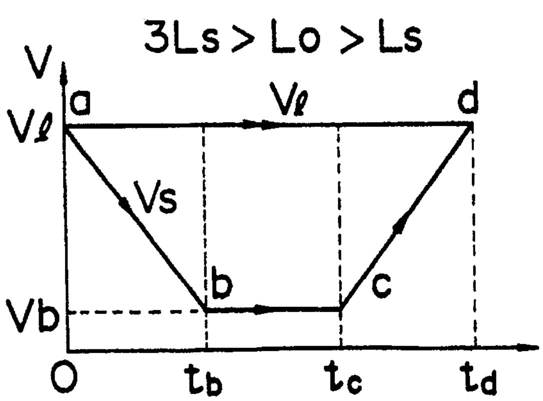


FIG. 4(d)

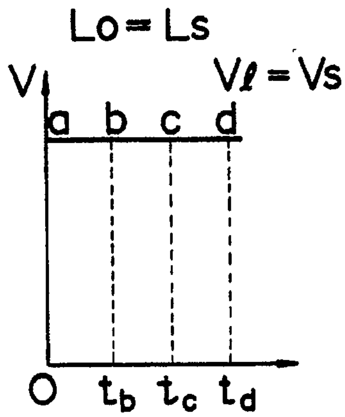


FIG. 4(e)

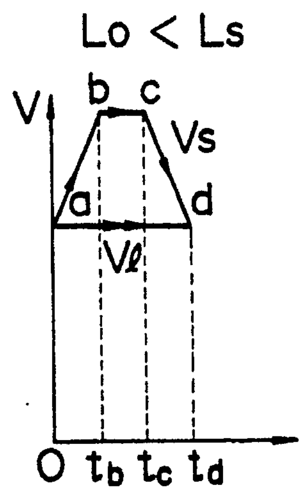

FIG. 5

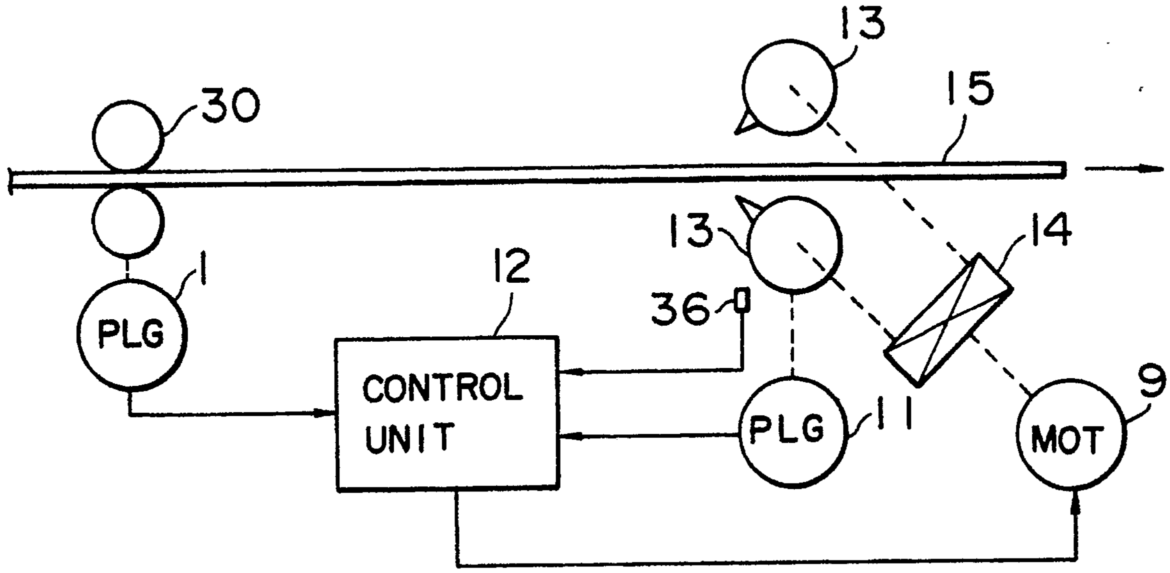
30
13
15
13
14
12
36
PLG
1
CONTROL UNIT
PLG
11
MOT
9

FIG. 7

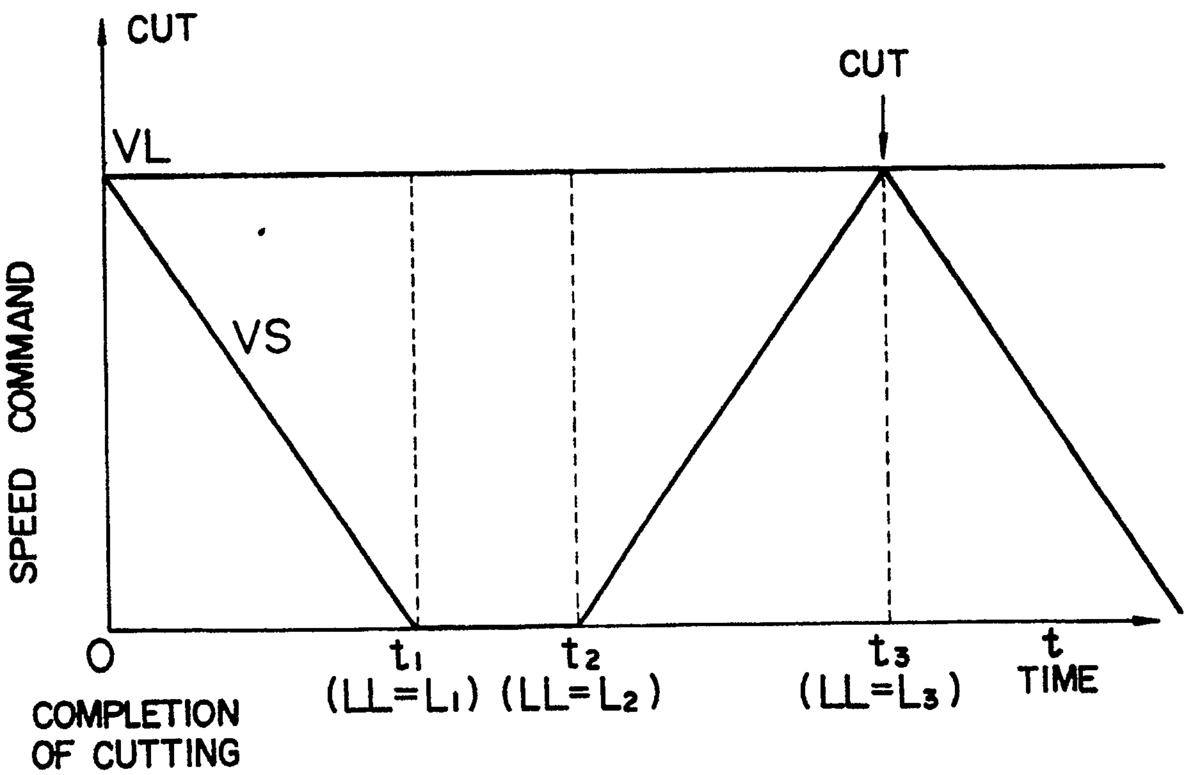
CUT
VL
CUT
VS
SPEED COMMAND
0
COMPLETION OF CUTTING
t1 (LL=L1)
t2 (LL=L2)
t3 (LL=L3)
t
TIME

FIG. 6

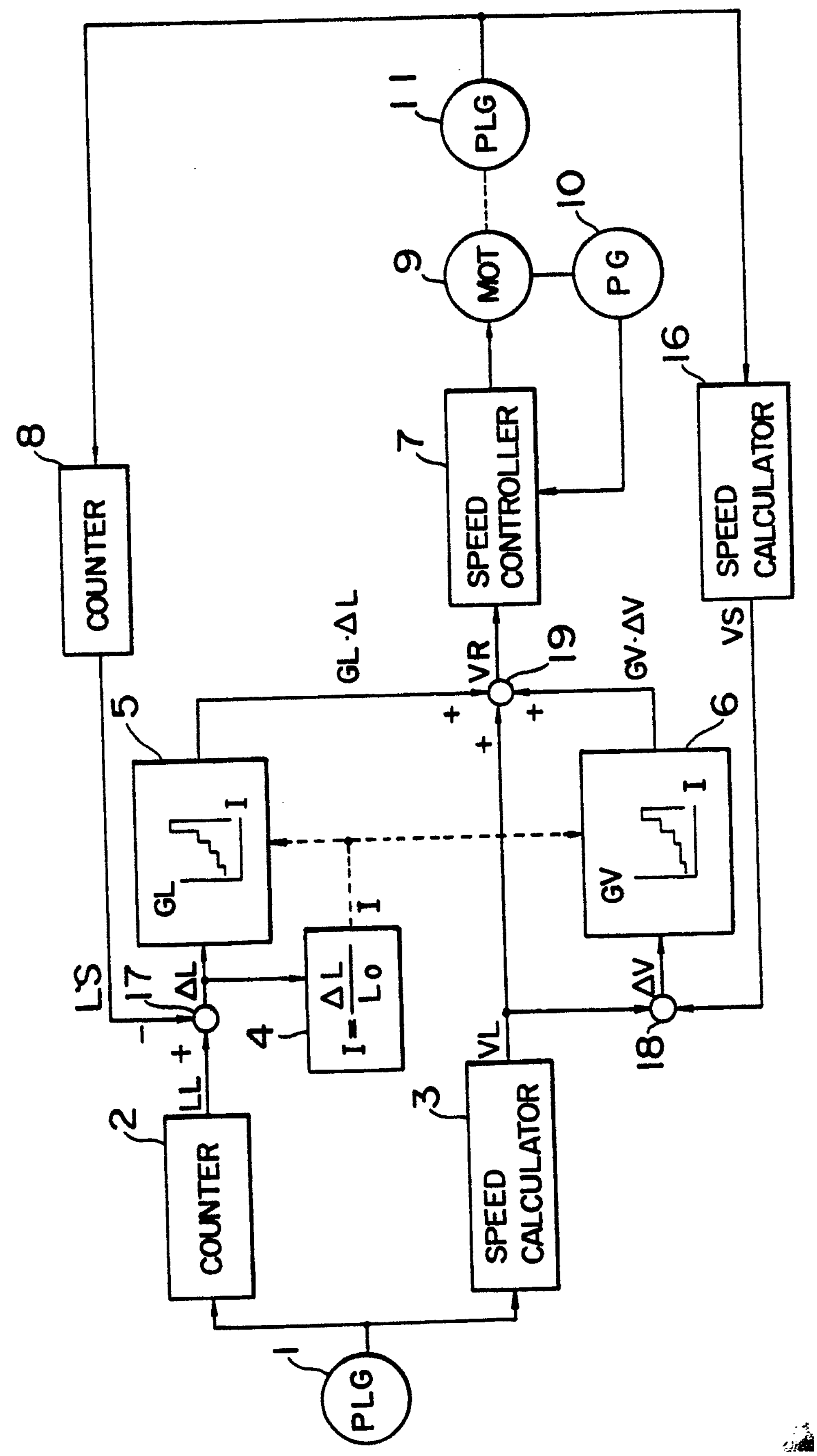
PLG
COUNTER
SPEED CALCULATOR
LL
VL
I = ΔL/Lo
GL
GV
ΔL
ΔV
LS
VS
GL·ΔL
GV·ΔV
VR
SPEED CONTROLLER
MOT
PG
PLG
COUNTER
SPEED CALCULATOR
1
2
3
4
5
6
7
8
9
10
11
16
17
18
19